# FASCICULE DE BREVET EUROPEEN

(11) **EP 2 366 760 B1**
(45) Date de publication et mention de la délivrance du brevet: **06.09.2017**
(21) Numéro de dépôt: 11290065.9
(22) Date de dépôt: 31.01.2011
(51) Int. Cl.: C10G 11/18

(54) **Procédé de craquage catalytique avec contrôle fin de la teneur en coke résiduelle sur le catalyseur après régénération**
Verfahren zum katalytischen Cracken mit feiner Kontrolle des Restgehalts an Koks auf dem Katalysator nach Regenerierung
catalytic cracking process with fine control of the residual coke content on the catalyst after regeneration

(30) Priorité: 15.03.2010 FR 1001031
(43) Date de publication de la demande: 21.09.2011
(73) Titulaire: IFP Énergies nouvelles, 92852 Rueil-Malmaison Cedex (FR)
(72) Inventeur: Roux, Romain, 92500 Rueil Malmaison (FR); Gauthier, Thierry, 69530 Brignais (FR)

(56) Documents cités:
- US-A- 4 417 975
- US-A- 4 601 814
- US-A- 4 666 586
- US-A- 4 780 195
- US-A- 5 077 251

## Description

### DOMAINE DE L'INVENTION

La présente invention se situe dans le domaine du craquage catalytique de coupes pétrolières, plus particulièrement de coupes dites "lourdes", c'est à dire de coupes dont moins de 10% poids des hydrocarbures ont un point d'ébullition inférieur à 350°C.

L'invention concerne plus particulièrement un procédé de craquage catalytique, constitué d'au moins d'une zone de réaction mettant en contact le catalyseur et les hydrocarbures pour effectuer les réactions de craquage catalytique, et une zone de régénération du catalyseur constituée d'au moins deux lits fluidisés interconnectés, et permettant le contrôle fin de la teneur en coke résiduelle sur le catalyseur à des teneurs supérieures à 0,15% pds, préférentiellement supérieures à 0,25 % poids. La disposition particulière de la zone de régénération qui fait l'objet de la présente invention permet de limiter l'activité du catalyseur dans la zone de réaction, le procédé étant caractérisé par le fait qu'une partie du catalyseur est exposée à des conditions de combustion totale, l'autre partie étant soumise à des conditions de combustion partielle, et les deux parties étant ensuite mélangées pour délivrer un catalyseur régénéré avec une teneur en coke résiduel parfaitement contrôlée et supérieure à 0,15%.

L'invention est particulièrement intéressante à mettre en oeuvre dans le cas où l'on cherche à maximiser les coupes intermédiaires de craquage telles que le LCO, ou d'une manière plus générale, dans le cas où l'on souhaite contrôler l'activité du catalyseur entrant dans la zone réactionnelle en maintenant une concentration en coke supérieure à 0,15%, préférentiellement supérieure à 0,25%, sur le catalyseur régénéré.

### ÉXAMEN DE L'ART ANTERIEUR

Le FCC est un procédé bien connu qui a subi de nombreuses évolutions depuis les années 1930 (voir Avidan A., Shinnar R., "Development of catalytic cracking technology: A lesson in chemical reactor design", Ind.Eng.Chem.Res, 29, 931-942, 1990). Le FCC est un procédé caractérisé par une zone de réaction dans laquelle s'effectuent les réactions de craquage sur un catalyseur de type zéolithique, et une zone de régénération qui permet d'éliminer par combustion le coke déposé sur le catalyseur au cours des réactions de craquage.

Le catalyseur coké après le craquage dans la zone de réaction contient en général de 0,5 % à 2% de coke, généralement autour de 1%. L'activité du catalyseur dépend essentiellement de la teneur en coke déposé sur ledit catalyseur, donc de la qualité de la régénération. Si le catalyseur est bien régénéré, avec une teneur en coke résiduelle (dite CRC) inférieure à 0,15%, on considère que l'activité dudit catalyseur est restaurée.

Il existe plusieurs modes de régénération des catalyseurs.

Dans les procédés traitant classiquement des charges de type distillat sous vide contenant des quantités limitées de résidu, la régénération s'effectue en général dans une zone de régénération constituée d'un lit fluidisé simple, ou éventuellement dans une zone de régénération constituée d'un lit transporté avec recyclage partiel du catalyseur régénéré pour maintenir une température appropriée (technologie dite du "fast combustor", (qu'on peut traduire par combustion rapide). On peut trouver une description de cette technologie par exemple dans "Guide to Fluid Catalytic Cracking part one, page 35, Fig.15, publié par Grace Davidson, 1993)
Lorsqu'on effectue la combustion d'un catalyseur de FCC coké, il est possible de travailler en combustion partielle ou en combustion totale. Ces deux modes, bien connus de l'homme du métier se différencient par les conditions stoechiométriques de réaction entre l'oxygène contenu dans l'air de régénération et le coke déposé sur le catalyseur.
- En combustion partielle, la combustion s'effectue en défaut d'oxygène. Il n'y a pas suffisamment d'oxygène présent dans l'air de régénération pour effectuer la combustion totale du carbone et de l'hydrogène présents dans le coke. De ce fait, la combustion conduit à la formation conjointe d'oxydes de carbone, de dioxyde de carbone et d'eau.
- En combustion totale, l'oxygène est en léger excès par rapport à la stoechiométrie, et la combustion conduit essentiellement à la formation de dioxyde de carbone et d'eau.

Le contrôle de la combustion sur un régénérateur simple est surtout lié au rapport entre la quantité d'oxygène disponible pour la combustion et la quantité de coke à brûler. Ainsi, si le rapport massique entre des débits d'air et de coke dans le régénérateur est voisin de 9 -10, alors le rapport CO/CO2 dans les fumées est voisin de 1.

Si au contraire, le rapport massique entre les débits d'air et de coke à l'entrée de la régénération est plus proche de 13-15, alors il est possible de réaliser une combustion totale du coke, le rapport CO/CO2 dans les fumées étant alors inférieur à 0,1 voire 0,01.

La combustion totale est plus exothermique que la combustion partielle. Elle conduit donc pour une même quantité de coke brulé à un réchauffement du catalyseur plus important. Elle permet de régénérer totalement le catalyseur, et la teneur en coke du catalyseur après régénération est en général bien inférieure à 0,10% poids, voire très souvent inférieure à 0,05% pds. Dans ces conditions, le coke encore présent sur le catalyseur en sortie de régénération représente en général moins de 5-10% du coke entrant.

La combustion partielle est moins exothermique et conduit à un réchauffement du catalyseur plus limité. Par contre, elle ne permet pas de régénérer totalement le catalyseur, et en général, plus le rapport CO/CO2 des fumées est élevé, plus la teneur en coke sur le catalyseur régénéré augmente. Il est courant d'obtenir des teneurs en coke sur le catalyseur régénéré en sortie de régénération, comprises entre 0,3 et 0,7% poids, soit de 15% à 50% du coke entrant dans le régénérateur.

Il est bien connu de l'homme du métier que l'activité catalytique du catalyseur dépend essentiellement de la teneur en coke déposé sur ledit catalyseur.

De manière générale, la conversion décroit lorsque la teneur en coke résiduel sur le catalyseur régénéré augmente.

Il est par ailleurs également bien connu que la diminution de la conversion permet de maximiser la production d'espèces de craquage intermédiaires telles que le LCO (abréviation de Light Cycle Oil), qui est un gazole de FCC résultant du craquage de distillat sous vide ou de résidu sous vide. A haute conversion, ce LCO est en effet consommé par les réactions de craquage secondaire.

La maximisation du LCO passe donc par le craquage à des niveaux de conversion modérés, que l'on peut atteindre soit en baissant la température de craquage, soit en limitant la circulation de catalyseur, soit en limitant l'activité du catalyseur en effectuant par exemple une régénération partielle.

Contrôler un FCC équipé d'un régénérateur simple et opérant en combustion partielle n'est pas aisé. Il est en effet difficile de contrôler à la fois la teneur en coke résiduel et le rapport CO/CO2 des fumées. En effet, les cinétiques de combustion régissant la conversion du carbone vers le CO ou vers le CO2 dépendent naturellement de la température, de la pression partielle en eau, mais ces réactions sont plus ou moins accélérées en fonction de la teneur en métaux du catalyseur ou de sa composition.

Pour une quantité d'air injectée constante rapportée à la quantité de coke brulé, la combustion est donc plus ou moins partielle ou totale et le rapport CO/CO2 des fumées, la température ou la teneur en coke résiduel peuvent varier significativement. Or la teneur en coke résiduel n'est pas mesurée en ligne sur l'unité et peut modifier de façon significative l'activité catalytique dans le riser.

Il est bien connu qu'un FCC opérant en combustion partielle permet de traiter des charges plus lourdes qu'un FCC opérant en combustion totale. Pour traiter des charges très lourdes telles que des résidus atmosphériques hydro traités, il peut être avantageux d'effectuer une régénération en plusieurs étages, telle que décrite par exemple dans les brevets US4 455 6479 ou US4 601 814.

Le brevet US4 666 586 décrit une régénération en plusieurs étages comportant une première zone de régénération en mode ascendant, une seconde zone de régénération avec une enceinte fluidisée présentant un lit dense et une troisième zone de régénération avec une enceinte fluidisée présentant un lit dense. La double régénération met en oeuvre un premier étage de régénération, opéré en lit fluidisé, dans lequel le catalyseur coké provenant de la zone réactionnelle est mis en contact avec de l'air. Dans la suite du texte on appelle en abrégé Reg1 le premier étage de la régénération ou premier régénérateur, et Reg 2 le second étage de la régénération ou deuxième régénérateur.

Dans le premier étage de régénération, noté Reg1, on brule en général entre 50% et 80% du coke déposé sur le catalyseur, grâce à la mise en contact avec une partie seulement de l'air requis pour régénérer l'ensemble du catalyseur.

Les fumées riches en CO sont évacuées du Reg1. Le CO résiduel est brulé à l'extérieur de l'unité. L'échauffement du catalyseur dans le premier régénérateur est limité par la combustion partielle, une partie de la chaleur de combustion étant produite à l'extérieure du régénérateur par la combustion ultime du CO dans une chaudière séparée permettant par exemple de produire de la vapeur.

Le catalyseur partiellement régénéré est transporté dans le second étage de régénération en lit fluidisé noté Reg 2. Quand le Reg 2 est situé au dessus du premier régénérateur, ce qui est le cas le plus fréquent, le transport du catalyseur du Reg 1 vers le Reg 2 peut s'effectuer par une ligne de transport pneumatique à l'air, l'air de transport participant au processus de régénération.

Dans le deuxième régénérateur, la quantité d'air introduite est en excès par rapport aux besoins de la combustion, ce qui est facilement vérifiable par la mesure en continu d'un excès d'oxygène dans les fumées (généralement compris entre 0,5 et 4% en volume des fumées sèches, préférentiellement entre 1 et 3% en volume). L'exothermicité de la combustion totale est importante et provoque, malgré la combustion de quantités de coke plus faibles qu'au premier régénérateur, un échauffement du catalyseur encore très significatif. Ainsi, à titre d'exemple, un profil de température classiquement rencontré en craquage catalytique de résidu avec ce type de régénération est le suivant:

| | |
|---|---|
| température catalyseur entrée Reg1 | = 510°C |
| température catalyseur sortie Reg 1 | = 690°C |
| température catalyseur sortie Reg 2 | = 760°C |

A l'entrée du premier régénérateur, la teneur en coke est ici d'environ 1,4 %.

A la sortie du premier régénérateur la teneur en coke du catalyseur est d'environ 0,4%-0,5%, et en sortie du deuxième régénérateur, la teneur en coke du catalyseur est d'environ 0,05%.

Dans tous les cas, une concentration en coke inférieure à 0,25% est facilement atteignable en sortie du Reg2 dès l'instant où il y a dans les fumées du reg2 un excès d'oxygène.

Il est bien établi que la double régénération permet de traiter des charges encore plus lourdes que les régénérateurs simples opérant en combustion partielle qui eux même permettent de traiter des charges plus lourdes que les régénérateurs simples opérant en combustion totale.

D'une manière générale, la configuration de la zone de régénération oriente le bilan thermique du FCC et permet de traiter des charges de Carbon Conradson variable. Le tableau 1 ci dessous résume les charges traitables par un FCC en fonction du type de régénération, la charge étant décrite ici par le Carbone Conradson qui résume bien son aptitude à coker.

**tableau 1**

| | |
|---|---|
| Régénération simple en combustion totale | : < 2,5% Carbone Conradson |
| Régénération simple en combustion partielle | : < 3,5% Carbone Conradson |
| Double régénération (procédé R2R) | : < 6-7% Carbone Conradson |

La présente invention permet de traiter l'ensemble des charges selon le tableau 1 avec un contrôle très fin de la teneur en coke résiduel en sortie de régénération, ce qui permet d'orienter à volonté la structure des rendements, notamment vers le LCO lorsque la dite teneur en coke du catalyseur à l'entrée de la zone réactionnelle se situe dans la plage de 0,25% à 0,7%, en fonction des charges et des catalyseurs, et préférentiellement dans la plage 0,3%-0,4% .

### DESCRIPTION SOMMAIRE DES FIGURES

La figure1 représente un mode de réalisation de l'invention dans lequel le catalyseur issu du deuxième étage de régénération retourne au premier étage de régénération.
La figure 2 représente un second mode de réalisation de l'invention dans lequel le catalyseur issu du deuxième étage de régénération est mélangé à une partie du catalyseur issu du premier étage de régénération dans une enceinte dédiée.
La figure 3 représente un troisième mode de réalisation de l'invention dans lequel le premier étage de régénération est placé au dessus du second étage de régénération. Le catalyseur s'écoule par gravité du premier étage de régénération au second étage de régénération.

### DESCRIPTION SOMMAIRE DE L'INVENTION

La présente invention concerne une mise en oeuvre de la régénération du catalyseur dans un procédé de craquage catalytique, dans laquelle on recherche un contrôle très fin du niveau de coke résiduel, c'est à dire après régénération.

Pour atteindre cet objectif, l'invention décrit une zone de régénération à deux étages un premier étage travaillant en combustion partielle, et un second étage travaillant en combustion totale, le circuit du catalyseur entre les deux étages comportant une ligne de retour du catalyseur totalement régénéré issu du deuxième étage, vers le premier étage, ou vers une enceinte fluidisée dédiée dans laquelle ledit catalyseur se mélange avec le catalyseur partiellement régénéré issu du premier étage.

La présente invention permet d'obtenir un réglage fin du niveau de coke résiduel sur le catalyseur régénéré par le contrôle du débit de catalyseur issu du second étage de régénération.

Le catalyseur résultant du mélange et ayant le niveau requis de coke résiduel est renvoyé vers la zone réactionnelle dans laquelle s'effectuent les réactions de craquage de la charge lourde.

Au final le catalyseur issu de la régénération est partiellement régénéré avec une teneur en coke résiduel moyenne supérieure à 0,15%, préférentiellement supérieure à 0,25%, une partie du catalyseur régénéré ayant été exposée à des conditions de combustion totale et possédant une teneur en coke résiduel inférieur à 0,1%.

Bien entendu, il est possible de multiplier les zones de régénération selon la présente invention de manière à délivrer à partir de chaque zone de régénération un catalyseur partiellement régénéré à la teneur en coke résiduel voulue, de manière à alimenter une ou plusieurs zones de réaction.

L'invention selon les revendications attenantes peut se définir comme un procédé de craquage catalytique d'une charge hydrocarbure à point d'ébullition supérieur à 350°C, permettant un contrôle fin du niveau de coke résiduel sur le catalyseur régénéré, ledit procédé comportant au moins une zone de réaction mettant en contact en lit transporté la charge hydrocarbure à traiter et le catalyseur, et une zone de régénération dudit catalyseur coké en sortie de la zone de réaction, la dite zone de régénération étant divisée en un premier étage de régénération en lit fluidisé travaillant en combustion partielle (c'est à dire en défaut d'air), et générant un catalyseur dont le taux de coke résiduel est compris entre 0,3% et 0,7%, et un second étage de régénération en lit fluidisé placé en série par rapport au premier étage, et travaillant en combustion totale (c'est à dire en excès d'air) et générant un catalyseur dont le taux de coke résiduel est inférieur à 0,15%, le catalyseur régénéré obtenu à la suite du mélange des catalyseurs partiellement régénéré et totalement régénéré ayant un taux de coke résiduel supérieur à 0,15%, préférentiellement supérieur à 0,25%, et étant renvoyé dans la zone réactionnelle.

Plus précisément, l'invention peut se décliner selon 2 modes de réalisation principaux:
- un premier mode dans lequel le catalyseur totalement régénéré issu du deuxième étage de régénération est réintroduit dans le premier étage de régénération par une conduite munie d'une vanne de régulation du débit de catalyseur.
- un deuxième mode de réalisation de l'invention dans lequel le catalyseur totalement régénéré issu du deuxième étage de régénération est introduit dans une enceinte dédiée par l'intermédiaire d'une conduite du même type que la précédente, ladite enceinte permettant le mélange avec le catalyseur partiellement régénéré issu du premier étage de régénération.

Selon le premier et le second mode de réalisation de l'invention, le catalyseur totalement régénéré obtenu en sortie du second étage de régénération est:
a) soit renvoyé par une conduite de liaison dans le premier étage de régénération, à partir duquel le catalyseur résultant du mélange des deux étages, et possédant le niveau de coke voulu, est renvoyé vers la zone de réaction,
b) soit envoyé par une conduite de liaison dans une enceinte de mélange dédiée dans laquelle le catalyseur totalement régénéré se mélange avec le catalyseur partiellement régénéré issu du premier étage de régénération, enceinte à partir de laquelle ledit catalyseur résultant du mélange, et possédant le niveau de coke voulu, est renvoyé dans la zone de réaction,
le procédé étant caractérisé en ce que la circulation de catalyseur du premier étage vers le deuxième étage de régénération est rigoureusement contrôlée par une vanne placée dans le cas a) sur la conduite de liaison entre les dits premier et second étages, dans le cas b) sur la ligne reliant le second étage et l'enceinte dédiée.

### DESCRIPTION DETAILLE DE L'INVENTION

Comme il a été vu précédemment, le contrôle de la teneur en coke du catalyseur régénéré pour ajuster l'activité catalytique n'est pas simple à réaliser à l'aide des technologies de régénération disponibles, notamment la technologie à un seul étage de régénération.

L'objet de la présente invention est donc de pallier à cette difficulté en proposant un système de régénération de catalyseur permettant un contrôle fin de la teneur en coke sur le catalyseur résiduel grâce à un agencement original de la zone de régénération.

Le système proposé est caractérisé par le fait que la zone de régénération est composée d'au moins deux étages en lit fluidisé, le catalyseur provenant de la zone réactionnelle étant introduit dans le premier étage opérant en combustion partielle, puis dans le second étage opérant en combustion totale et placé en série par rapport au premier étage, le catalyseur régénéré issu du second étage retournant vers la zone réactionnelle après mélange avec le catalyseur issu du premier étage, et la circulation du catalyseur entre le premier étage opérant en combustion partielle et le second étage opérant en combustion totale étant contrôlée.

C'est à partir du contrôle de la circulation de catalyseur entre le premier étage de régénération (I) et le second étage de régénération (II) que s'obtient la valeur précise du taux de coke résiduel sur le catalyseur réintroduit en zone réactionnelle, et non plus comme dans l'art antérieur, à partir de paramètres plus ou moins faciles à contrôler tels que le rapport entre la quantité d'air introduit dans le ou les étages de régénération.

De plus, il a été constaté de manière surprenante que le catalyseur régénéré selon l'invention, c'est à dire résultant du mélange entre d'une part du catalyseur partiellement régénéré avec un taux de coke résiduel compris entre 0,3 et 0,7% et, d'autre part, du catalyseur totalement régénéré avec un taux de coke résiduel inférieur à 0,15%, n'est pas équivalent à du catalyseur partiellement régénéré qui aurait un taux de coke résiduel intermédiaire au prorata des flux massiques.

Cette non équivalence se traduit en particulier par un rendement en LCO légèrement amélioré par rapport à celui qui serait obtenu avec un cata partiellement régénéré homogène, ce qui est probablement associé à une non linéarité dans l'accessibilité des molécules hydrocarbonées à la zéolithe en fonction de la teneur en coke sur le catalyseur.

Cela signifie que le catalyseur régénéré au sens de l'invention est composé de deux populations de taux de coke différents.

La mise en oeuvre de l'invention sera préférentiellement effectuée dans des étages de régénération opérant en régime turbulent ou en régime de transport, correspondant pour des catalyseurs de FCC usuels, à des vitesses superficielles de gaz de fluidisation dans le régénérateur supérieures à 0,3 m/s pour le régime turbulent, et supérieure à 1,6 m/s pour le régime de transport.

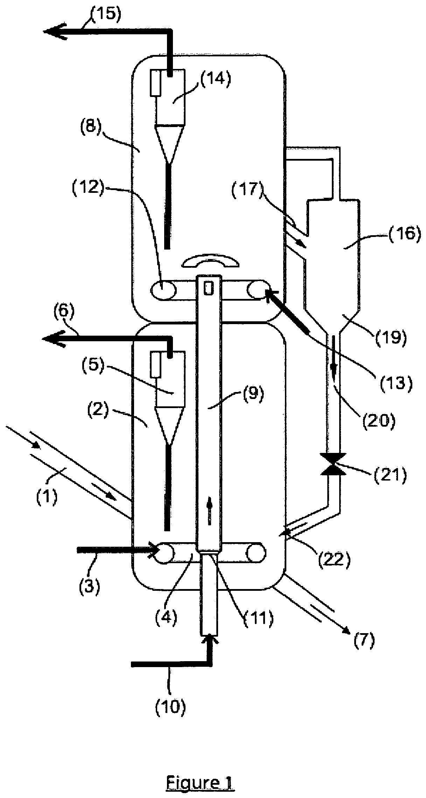

La figure 1 ci dessous décrit un premier mode de réalisation de l'invention.

Le catalyseur coké, provenant du réacteur est introduit par un conduit (1) dans une enceinte contenant un premier lit fluidisé (2) qui correspond au premier étage de régénération. Dans cette enceinte, le catalyseur est mis au contact avec un gaz (3) contenant de l'oxygène, par exemple de l'air ambiant comprimé au préalable, de l'air enrichi en oxygène ou de l'oxygène, plus ou moins dilué, par exemple par des fumées de combustion.

Le gaz de combustion est introduit dans la partie inférieure du lit fluidisé par des moyens (4) permettant une bonne distribution du gaz sur la section du régénérateur. Ces moyens sont par exemple des couronnes de distribution, des tuyaux multi branchés ou des plaques à trou perforées, moyens bien connus de l'homme du métier qui permettent une fluidisation uniforme du catalyseur sur la section du régénérateur (2).

Pour contrôler la température en favorisant le mélange du catalyseur, la vitesse de fluidisation dans la phase dense du lit fluidisé sera maintenue entre 0,3 et 1,6 m/s, préférentiellement comprise entre 0,5 et 1,2 m/s. La distribution du gaz étant uniforme sur toute la section du régénérateur (2), la combustion s'effectue essentiellement dans la phase dense.

Les fumées entraineront néanmoins dans la phase diluée du régénérateur des quantités non négligeables de catalyseur et le dépoussiérage des fumées s'effectue dans une première étape à l'intérieur du régénérateur par un cyclonage simple étage (5) ou double étage.

La combustion dans le régénérateur (2) est partielle. Le rapport CO/CO2 des fumées est élevé et peut être compris typiquement entre 0,3 et 2.

Les fumées contenant des quantités importantes de CO sont évacuées du régénérateur en aval des cyclones (6) et subissent ensuite des post-traitements tels que la postcombustion du CO, le dépoussiérage ultime, le turbinage et l'échange de chaleur pour récupérer une partie de l'énergie des fumées, l'élimination des oxydes de soufre et d'azote, voire la séparation du CO2 .

Le catalyseur est soutiré du premier étage de régénération (2) par un conduit (7) prenant le catalyseur dans la phase dense du lit fluidisé pour le transporter vers la zone réactionnelle dans laquelle s'effectuent les réactions de craquage des hydrocarbures contenus dans la charge lourde.

Une partie du catalyseur circulant dans le premier étage de régénération (2) est également soutirée et dirigée vers le deuxième étage de régénération (8) située au dessus du premier étage de régénération (2). Le transfert de catalyseur entre les deux étages est effectué grâce à une ligne de transport (9), alimentée par un débit de gaz (10), dont la composition peut être similaire à la composition du gaz (3).

Le débit de catalyseur dans la ligne de transport (9) est contrôlé par le positionnement d'une vanne (11) de type "à bouchon", placée à la base du tube de transport (9).

Si le gaz utilisé comme vecteur de transport dans la ligne de transport (9) contient de l'oxygène, une part non négligeable de la combustion peut se produire au cours du transport.

De manière préférentielle, le débit de gaz (10) pour le transport dans le lift sera maintenu constant et permettra d'atteindre des vitesses préférentiellement comprises entre 5 m/s et 10 m/s.

Le flux de catalyseur transporté sera avantageusement compris entre 100 et 800 kg/s/m2, de préférence entre 300 et 600 kg/s/m2, ce qui permet de minimiser le gaz de transport et la dissipation de pression associée au transport.

En sortie de lift, la suspension constituée du catalyseur partiellement régénéré en provenance de la première enceinte de régénération et du gaz de transport est introduite par des ouvertures situées dans la partie supérieure de la ligne de transport (9) dans le deuxième étage de régénération (8).

Dans cette enceinte, le catalyseur est mis au contact avec un gaz de combustion (13) contenant de l'oxygène, par exemple de l'air ambiant comprimé au préalable, de l'air enrichi en oxygène ou de l'oxygène, plus ou moins dilué, par exemple par des fumées de combustion.

Le gaz de combustion (13) est introduit dans la partie inférieure du lit fluidisé avec des moyens (12) permettant une bonne distribution du gaz sur toute la section du réacteur (8).

Ces moyens d'introduction (12) sont par exemple des couronnes de distribution, des tuyaux multi branchés, ou des plaques à trou perforées, moyens bien connus de l'homme du métier qui permettent une fluidisation uniforme du catalyseur sur toute la section du régénérateur.

Pour contrôler la température en favorisant le mélange du catalyseur, la vitesse de fluidisation dans la phase dense du lit fluidisé sera préférentiellement maintenue entre 0,3 et 1,3 m/s, préférentiellement comprise entre 0,5 et 1 m/s.

La distribution du gaz étant uniforme sur toute la section, la combustion s'effectue essentiellement dans la phase dense.

Les fumées entraineront néanmoins dans la phase diluée du régénérateur (8) des quantités non négligeables de catalyseur, et le dépoussiérage des fumées s'effectue dans une première étape par un cyclonage à simple étage (14) comme représenté sur la figure 1 ou à double étage, à l'intérieur ou à l'extérieur du régénérateur.

La combustion dans le régénérateur (8) est totale. Le rapport CO/CO2 des fumées (15) est très faible et est généralement inférieur à 0,05, voire 0,01. La mesure simple de la teneur en oxygène dans les fumées sèches, facilement réalisable permet de vérifier qu'il reste de l'oxygène en excès après la combustion. Une teneur en oxygène des fumées de l'ordre de 1-2% vol permet en général de s'assurer que la combustion est totale.

Les fumées (6) contenant des quantités importantes de CO sont évacuées du premier étage de régénération en aval des cyclones (5), et subissent ensuite des post-traitements tels que le dépoussiérage ultime, le turbinage et l'échange de chaleur pour récupérer une partie de l'énergie des fumées, l'élimination des oxydes de soufre et d'azote, voire la séparation du CO2.

Les fumées (15) du deuxième étage de régénération (8) peuvent être astucieusement combinées avec les fumées (6) du premier étage de régénération pour effectuer les post-traitements.

Le catalyseur régénéré dans le deuxième étage de régénération (8) est ensuite renvoyé dans le premier étage de régénération (2). Ainsi dans le cas décrit sur la figure 1, des moyens spécifiques de soutirage du catalyseur depuis l'enceinte (8) vers l'enceinte (2) sont mis en oeuvre.

Ces moyens sont dans le cadre de la présente invention, constitués d'une ligne de transfert latérale (17) alimentant une enceinte fluidisée (16) travaillant à une vitesse de fluidisation comprise entre 0,05 m/s et 0,1 m/s, le catalyseur descendant dans cette enceinte à une vitesse inférieure à 0,5 m/s, enceinte fluidisée (16) dans laquelle on désengage les bulles transportées avec le catalyseur, puis on accélère la suspension dans une partie conique inférieure (19) avant d'amener la suspension de catalyseur en écoulement descendant dans un tube (20) de transport sensiblement vertical, dans lequel la suspension voyage avec une vitesse comprise idéalement entre 1 m/s et 3 m/s.

Une vanne (21) est positionnée au bas du tube de transport (20) et permet par exemple de maintenir un niveau constant de catalyseur dans le deuxième étage de régénération (8).

Sous cette vanne (21), le tube de transport (20) décharge la suspension par son ouverture (22) dans la phase dense ou dans la phase diluée de la première enceinte de régénération (2). Selon la figure 1, à titre d'exemple, le tube (20) décharge la suspension dans la phase dense du premier étage de régénération (2).

Il peut être judicieux d'optimiser la distribution de catalyseur provenant du deuxième étage de régénération (8) lors de sa réintroduction dans le premier étage de régénération (2) pour favoriser l'homogénéité de la température dans le premier étage de régénération. En effet, le catalyseur provenant du deuxième étage de régénération (8) est plus chaud que le catalyseur mélangé dans le premier étage de régénération (2) du fait de la combustion additionnelle réalisée. Plusieurs solutions sont possibles.

Il peut être judicieux de mélanger le catalyseur provenant du deuxième étage de régénération (8) avec le catalyseur provenant de la zone de réaction, en faisant en sorte que les deux points d'introduction soient suffisamment proches pour minimiser la perturbation thermique dans le premier étage de régénération. On entend par "proches" le fait que le point d'introduction du catalyseur coké en provenance de la zone de réaction, et le point d'introduction du catalyseur régénéré en provenance du second étage de régénération (8) sont éloignés d'une distance n'excédant pas le rayon du premier étage de régénération (2).

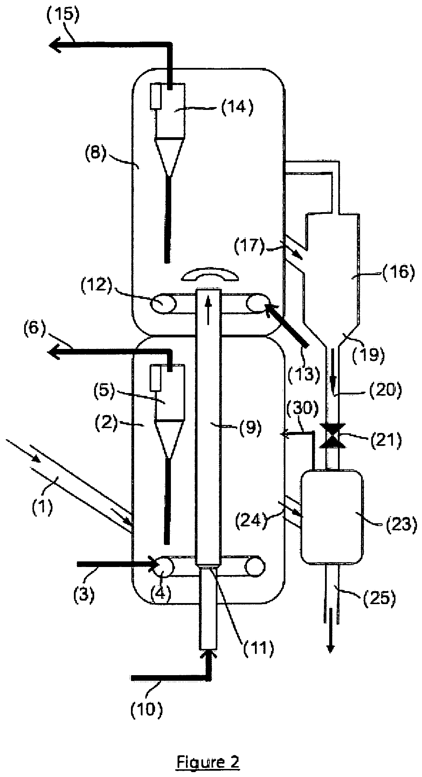

La figure 2 représente un autre mode de mise en oeuvre de l'invention.

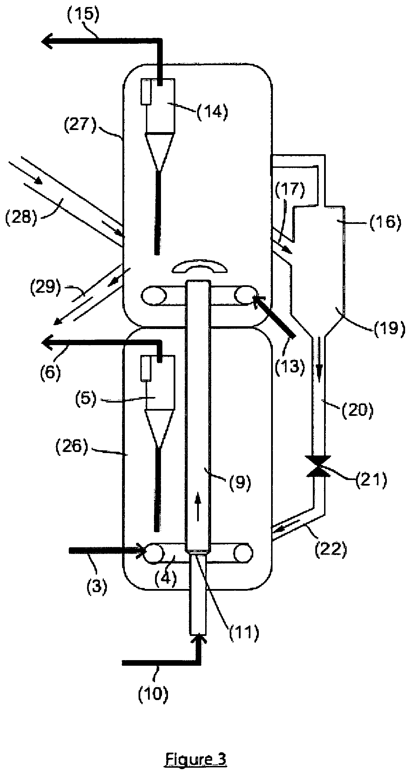

Les numéros communs aux figures 2 et 3 désignent les mêmes éléments.

Contrairement à la configuration représentée sur la figure 1, le catalyseur issu du deuxième étage de régénération (8) n'est pas réintroduit dans le premier étage de régénération (2), mais il est mélangé avec le flux de catalyseur soutiré du premier étage de régénération (2) dans une enceinte (23) fonctionnant en lit fluidisé à partir de laquelle le mélange obtenu est redirigé vers la zone réactionnelle par la ligne (25).

Le lit de l'enceinte de mélange (23) est fluidisé par un gaz inerte (N2, H20) ou par un gaz contenant de l'oxygène permettant d'effectuer une partie de la combustion. Les fumées issues de la dite combustion sont par exemple remélangées dans la phase diluée du premier étage de régénération grâce à un conduit (30) reliant l'enceinte de mélange (23) et la phase diluée du premier étage de régénération (2). L'enceinte (23) est une zone de mélange. Elle est caractérisée par un temps de séjour moyen du catalyseur préférentiellement inférieur à 60s. La vitesse de fluidisation reste modérée et préférentiellement inférieure à 10 cm/s. Dans le cas où un échangeur de chaleur est installé pour extraire une partie de la chaleur dégagée par la combustion du coke dans le régénérateur, il peut être avantageux d'installer l'échangeur de chaleur dans cette enceinte (23).

La différence essentielle entre la configuration décrite sur la figure 1 et la configuration décrite sur la figure 2 réside dans le fait que la température à laquelle s'effectue la combustion partielle dans le premier étage de régénération est plus élevée dans le cas où le catalyseur est réintroduit dans ledit premier étage de régénération (selon la figure 1), ce qui permet de favoriser les réactions de combustion en les rendant plus rapides.

Néanmoins, il peut être judicieux de limiter la température au premier étage de régénération (2), par exemple pour réduire la désactivation hydrothermale de la zéolithe, et la configuration décrite sur la figure 2 est alors particulièrement adaptée aux unités opérant avec des dépôts de coke élevés sur le catalyseur.

Dans ce cas on souhaite généralement limiter la température du premier étage de régénération (2) à des valeurs inférieures à 730°C, préférentiellement inférieures à 710°C.

La figure 3 est une variante de zone de régénération à deux étages. Dans ce cas, le premier étage de régénération (27) est situé au dessus du deuxième étage de régénération (26). Le catalyseur provenant de la zone réactionnelle (28) arrive dans la première zone réactionnelle (27) située au dessus de la deuxième zone réactionnelle (26). Il est soutiré de la première zone réactionnelle par la conduite (29) pour être réintroduit partiellement régénéré dans la zone réactionnelle. La circulation entre les deux enceintes de régénération est possible grâce à l'écoulement par gravité du premier étage de régénération (27) vers le deuxième étage de régénération (26) à travers le puits de soutirage (16) possédant une partie conique inférieure (19), le tube de transport (20) et la vanne (21).

Le transport pneumatique du deuxième étage (26) au premier étage (28) est réalisé à travers la vanne à bouchon (11) et le lift (9).

L'intérêt de l'invention réside dans un système de régénération qui permet un contrôle fin de la teneur en coke résiduel déposé sur le catalyseur régénéré, c'est à dire retournant à la zone réactionnelle, dans un FCC opérant en combustion partielle.

Les configurations de la zone de régénération décrites dans les figures 1 et 2 sont en effet particulièrement adaptées à un ajustement du contrôle de l'activité du catalyseur via le dépôt de coke sur le catalyseur. Le moyen d'action est le débit de catalyseur ayant subi une régénération totale dans le deuxième étage de régénération (8), vers le premier étage de régénération (2), ou vers l'enceinte de mélange fluidisée (23).

En effet, la quantité de catalyseur exposée à des conditions de régénération totale dépend directement de la circulation de catalyseur circulant du premier étage de régénération (2) vers le deuxième étage (8). Cette quantité de catalyseur est facilement contrôlable à travers les systèmes de transport munis de vannes (21) situés entre les deux régénérateurs. Il est par exemple possible d'imposer une consigne de débit en contrôlant l'ouverture de la vanne positionnée sur la ligne de transport entre le régénérateur opérant en combustion partielle et le régénérateur opérant en combustion totale, et d'asservir l'ouverture de la vanne (21) située sur la ligne de transport du régénérateur opérant en combustion totale (8) vers le régénérateur opérant en combustion partielle (2) à la régulation d'un niveau constant au régénérateur opérant en combustion totale. Cette stratégie permet alors de contrôler en continu et finement la quantité de catalyseur subissant la combustion totale .

Afin de réaliser la combustion totale dans le deuxième régénérateur, il convient de maintenir des conditions d'excès d'oxygène dans les fumées de celui ci, ce qui impose d'ajuster la répartition de l'air entre les deux enceintes de régénération lorsque la circulation de catalyseur varie entre les deux enceintes de régénération.

A ces fins, on pourra par exemple asservir le débit d'air dans le deuxième étage de régénération (8) à la teneur en oxygène de ses fumées
Avec un système tel que ceux décrits sur les figures 1 et 2, si l'on souhaite augmenter la teneur en coke sur le catalyseur régénéré renvoyé dans la zone de craquage, il suffit de diminuer la circulation de catalyseur entre les deux étages de régénération.

Si au contraire, on souhaite diminuer ladite teneur en coke, il faut augmenter la circulation de catalyseur entre les deux étages de régénération.

La variation de la circulation de catalyseur s'accompagne d'une modification de la répartition du débit d'air entre les deux étages de régénération, afin de maintenir des conditions de régénération adaptées à la combustion totale dans le deuxième régénérateur, caractérisées par un excès d'oxygène dans les fumées d'au moins 0,5% volume rapporté aux fumées sèches, de préférence supérieur à 1% volume rapporté aux fumées sèches.

L'opération d'un tel système permet de contrôler très finement la teneur en coke du catalyseur régénéré. Lorsque la circulation entre les deux étages de régénération change cependant, la quantité de coke brûlé en combustion totale augmente et l'exothermicité de la régénération globale augmente. Il en résulte une augmentation de la température du catalyseur qui retourne dans la zone de réaction dédiée au craquage.

Dans un FCC opéré à débit de charge constant, opérant en adiabatique sans extraction de chaleur additionnelle autre que le réchauffement des fluides impliqués dans le craquage et la régénération du catalyseur, on peut constater que l'augmentation de la circulation entre les deux zones de régénération (dans le but de diminuer la teneur en coke résiduel sur le catalyseur régénéré), s'accompagne d'une diminution de la circulation de catalyseur.

Si l'on souhaite maintenir dans ces conditions la circulation de catalyseur constante (pour mieux contrôler la réaction en fonction de la quantité de coke résiduelle sur le catalyseur régénéré), il alors est possible d'installer dans la zone de régénération un système de production de vapeur (échangeur de chaleur), tel qu'un système de refroidissement du catalyseur déjà bien décrit dans la littérature et connu de l'homme du métier sous le terme anglo saxon de "cat-cooler".

Cet échangeur refroidira préférentiellement du catalyseur provenant du deuxième régénérateur, déjà exposé à des conditions de régénération totales. Avec un tel équipement installé dans la zone de régénération, si la quantité de chaleur extraite est ajustée en fonction de la circulation de catalyseur, alors il est possible de varier la teneur en coke du catalyseur régénéré sans changer son débit vers la zone réactionnelle de craquage catalytique opérée avec un débit de charge et une température constante.

D'autres moyens sont envisageables pour contrôler le bilan thermique de l'unité dans le cas de charges très lourdes.

On peut par exemple extraire de la chaleur dans la zone réactionnelle de craquage en recyclant des coupes hydrocarbonées liquides qui, en se vaporisant, vont consommer une partie de l'excédent de chaleur associé à la production de coke. Cette technologie, dite technologie MTC (abréviation de "mix temperature control" qu'on peut traduire par contrôle de la température de mélange), est particulièrement intéressante à mettre en oeuvre avec le recyclage de fractions liquides correspondant à l'intervalle de distillation compris entre 150 et 300°, soutirées des produits déjà craqués dans la zone réactionnelle.

### EXEMPLES

Le premier exemple décrit le fonctionnement d'une unité de craquage catalytique opérant avec un système de régénération identique à celui décrit sur la figure 1.

Le débit de charge (Ff) dans la zone réactionnelle et les conditions de craquage (ROT=température sortie du riser) sont maintenus constants à une température très modérée de 490°C favorisant la production de LCO.

Le catalyseur est régénéré dans un système à deux régénérateurs, une partie du catalyseur seulement étant exposée à des conditions de combustion totale.

Dans le tableau 1 ci dessous, on montre qu'en faisant varier la quantité de catalyseur entre les deux régénérateurs, et en ajustant les débits d'air dans le premier et le deuxième régénérateur pour maintenir des conditions constantes de combustion totales (1%vol fumés sèches en excès) dans le deuxième régénérateur, et partielles (CO/CO2 molaire égal à 1) au premier régénérateur, il est possible de faire varier la teneur en coke du catalyseur régénéré (CRCreg) dans un domaine allant
- de 0,19 lorsque la circulation entre les deux régénérateurs représente 70% de la circulation entre la zone de régénération et la zone de craquage catalytique,
- à 0,52, lorsque cette circulation ne représente plus que 10% de la circulation entre la zone de régénération et la zone de craquage catalytique.

De plus, en diminuant l'avancement de la combustion au premier étage, en passant de 62% à 47%, il est possible d'atteindre un taux de coke résiduel de 0,68 % sur le catalyseur en faisant circuler 10% du catalyseur entre les deux régénérateurs.

Cela se traduit par une variation très importante de l'activité du catalyseur.

Dans ces conditions, ces variations s'accompagnent d'une augmentation du rapport C/O qui passe de 4,4 à 6,5 du fait du changement de température du catalyseur à l'issue de la régénération.

**Tableau 1**

| | | | | | | | | |
|---|---|---|---|---|---|---|---|---|
| Ff | debit de charge | t/h | 153,8 | 153,8 | 153,8 | 153,8 | | 153,8 |
| Fc | Débit de catalyseur | t/h | 1000 | 864,6 | 761,5 | 680 | | 1245 |
| C/O | C/O | (-) | 6,5 | 5,62 | 4,95 | 4,42 | | 8,1 |
| **ROT** | **température sortie riser** | **°C** | **490** | **490** | **490** | **490** | | **490** |
| Fcr | débit de cata allant du Reg1 au Reg2 | t/h | 100,0 | 259,4 | 380,8 | 476,0 | | 125,0 |
| TFcr | débit de cata allant du Reg1 au Reg2 | % circulation | 10 | 30 | 50 | 70 | | 10 |
| CRCreac | coke sur cata sortie réacteur | (%) | 1,45 | 1,45 | 1,45 | 1,45 | | 1,45 |
| PRCOK | % coke entrant brulé au reg 1 | % | **62** | **62** | **62** | **62** | | **47** |
| CRCreg1 | coke sur cata sortie reg1 | (%) | 0,58 | 0,58 | 0,58 | 0,58 | | 0,75 |
| CRCReg2 | coke sur cata sortie reg2 | (%) | 0,02 | 0,02 | 0,02 | 0,02 | | 0,02 |
| **CRCreg** | **coke sur cata sortie reg** | **(%)** | **0,524** | **0,412** | **0,3** | **0,188** | | **0,68** |
| AirReg1 | Air de combustion au Reg1 | kg/s | 27,4 | 23,7 | 20,9 | 18,6 | | 25,2 |
| Air Reg2 | Air de combustion au Reg2 | kg/s | 1,95 | 5,1 | 7,4 | 9,3 | | 3,2 |
| Treg1 | Température Reg1 | °C | 661,0 | 661,0 | 661,0 | 661,0 | | 622,0 |
| Treg2 | Température Reg2 | °C | 779,0 | 779,0 | 779,0 | 779,0 | | 779,0 |
| Trg | Température de retour au réacteur | °C | 673,0 | 697,0 | 720,0 | 744,0 | | 637,0 |

Le deuxième exemple décrit le fonctionnement de la même unité de craquage catalytique opérant avec un système de régénération identique à celui décrit sur la Figure 2, dans lequel un échangeur de chaleur, de puissance variable a été installé dans l'enceinte (23) de mélange des catalyseur partiellement régénérés et totalement régénérés.

Le débit de charge (Ff) dans la zone réactionnelle et les conditions de craquage (ROT=température de sortie du riser) sont maintenus constants à une température très modérée de 490°C favorisant la production de LCO et identiques à celles de l'exemple 1.

Le catalyseur est régénéré dans un système à deux régénérateurs, une partie du catalyseur seulement (Fcr) étant exposée à des conditions de combustion totale. Dans le tableau 2 ci dessous, on montre qu'en faisant varier la quantité de catalyseur entre les deux régénérateurs, en ajustant les débits d'air dans le premier et le deuxième régénérateur pour maintenir des conditions constantes de combustion totales (1% vol fumées sèches en excès dans le deuxième régénérateur), et partielles (CO/CO2 molaire égal à 1 au premier régénérateur), et en ajustant la chaleur extraite par l'échangeur de chaleur (PCC), il est possible de faire varier la teneur en coke du catalyseur régénéré (CRCreg) dans un domaine allant
- de 0,19 lorsque la circulation entre les deux régénérateurs représente 70% de la circulation entre la zone de régénération et la zone de craquage catalytique
- à 0,52, lorsque cette circulation ne représente plus que 10% de la circulation entre la zone de régénération et la zone de craquage catalytique.

Il est connu de l'homme du métier que cela se traduira par une variation très importante de l'activité du catalyseur.

Dans ces conditions, le débit de catalyseur circulant dans la zone réactionnelle reste constant, le C/O étant égal à 6,5 quel que soit la circulation entre les deux enceintes de régénération.

**Tableau 2**

| | | | | | | |
|---|---|---|---|---|---|---|
| Ff | débit de charge | t/h | 153,8 | 153,8 | 153,8 | 153,8 |
| Fc | Débit de catalyseur | t/h | 1000,0 | 864,6 | 761,5 | 680,0 |
| C/O | C/O | (-) | 6,5 | 6,5 | 6,5 | 6,5 |
| **ROT** | **température sortie riser** | **°C** | **490,0** | **490,0** | **490,0** | **490,0** |
| Fcr | débit de cata allant du Reg1 au Reg2 | t/h | 100,0 | 259,4 | 380,8 | 476,0 |
| TFcr | débit de cata allant du Reg1 au Reg2 | % circulation | 10,0 | 30,0 | 50,0 | 70,0 |
| CRCreac | coke sur cata sortie réacteur | (%) | 1,45 | 1,45 | 1,45 | 1,45 |
| CRCreg1 | coke sur cata sortie reg1 | (%) | 0,58 | 0,58 | 0,58 | 0,58 |
| CRCReg2 | coke sur cata sortie reg2 | (%) | 0,02 | 0,02 | 0,02 | 0,02 |
| **CRCreg** | **coke sur cata sortie reg** | **(%)** | **0,524** | **0,412** | **0,3** | **0,188** |
| Air Reg1 | Air de combustion au Reg1 | kg/s | 27,4 | 23,7 | 20,87 | 18,6 |
| Air Reg2 | Air de combustion au Reg2 | kg/s | 1,95 | 5,06 | 7,45 | 9,31 |
| Treg1 | Température Reg1 | °C | 661,0 | 661,0 | 661,0 | 661,0 |
| Treg2 | Température Reg2 | °C | 779,0 | 779,0 | 779,0 | 779,0 |
| PCC | | MW | 0,0 | 6,6 | 11,4 | 15,4 |
| Trg | Température de retour au réacteur | °C | 673,0 | 673,0 | 673,0 | 673,0 |

## Revendications

1. Procédé de craquage catalytique d'une charge hydrocarbure à point d'ébullition supérieur à 350°C, mettant en oeuvre un contrôle fin du niveau de coke résiduel sur le catalyseur régénéré, ledit procédé comportant au moins une zone de réaction mettant en contact en lit transporté la charge hydrocarbure à traiter et le catalyseur, et une zone de régénération dudit catalyseur coké en sortie de la zone de réaction, la dite zone de régénération étant divisée en un premier étage de régénération en lit fluidisé (2) travaillant en combustion partielle, c'est à dire en défaut d'air, générant un catalyseur dont le taux de coke résiduel est compris entre 0,3% et 0,7% et un second étage de régénération en lit fluidisé (8) placé en série par rapport au premier étage, et travaillant en combustion totale, c'est à dire en excès d'air, et générant un catalyseur dont le taux de coke résiduel est inférieur à 0,15%, le transfert du catalyseur du premier au second étage étant réalisé par la ligne de transport (9) alimentée par un débit de gaz (10) et munie d'une vanne de contrôle du débit de catalyseur (11) placée à la base du tube de transport (9), le catalyseur régénéré obtenu à la suite du mélange des catalyseurs partiellement régénéré et totalement régénéré, ayant un taux de coke résiduel supérieur à 0,15% et préférentiellement supérieur à 0,25%, ledit taux de coke étant obtenu par le contrôle de la circulation du catalyseur totalement régénéré obtenu en sortie du second étage de régénération qui est
a) soit renvoyé dans le premier étage de régénération, au moyen d'une ligne de transfert (17), d'une enceinte fluidisée (16), d'un tube de transport (20) et d'une vanne de contrôle (21), premier étage à partir duquel le catalyseur résultant du mélange des deux étages, et possédant le niveau de coke voulu, est renvoyé vers la zone de réaction par la conduite (7),
b) soit envoyé dans une enceinte de mélange dédiée (23) au moyen d'une ligne de transfert (17), d'une enceinte fluidisée (16), d 'un tube de transport (20) et d'une vanne de contrôle (21), enceinte de mélange (23) dans laquelle le catalyseur totalement régénéré se mélange avec le catalyseur partiellement régénéré issu du premier étage de régénération, enceinte de mélange (23) à partir de laquelle ledit catalyseur résultant du mélange, et possédant le niveau de coke voulu, est renvoyé dans la zone de réaction par la conduite (25),
le procédé étant **caractérisé en ce que** le catalyseur issu du deuxième étage de régénération travaillant en combustion totale est renvoyé dans le premier étage de régénération travaillant en combustion partielle ou dans l'enceinte de mélange (23) au moyen d'un ensemble de conduits comportant dans le sens d'écoulement dudit catalyseur
1) l'enceinte fluidisée (16) travaillant à une vitesse de fluidisation comprise entre 0,05 m/s et 0,1 m/s, le catalyseur descendant dans cette enceinte à une vitesse inférieure à 0,5 m/s,
2) le tube de transport (20) travaillant à une vitesse de transport du catalyseur comprise entre 1 et 3 m/s,
3) la vanne de contrôle (21) du débit de catalyseur asservie au niveau de catalyseur dans le deuxième étage de régénération et qui dans le cas b) est située en amont de l'enceinte de mélange (23).

2. Procédé de craquage catalytique permettant le contrôle fin du niveau de coke résiduel sur le catalyseur régénéré selon la revendication 1, dans lequel le catalyseur issu du deuxième étage de régénération travaillant en combustion totale est renvoyé dans une enceinte fluidisée de mélange (23) fonctionnant à une vitesse de fluidisation inférieure à 10 cm/s, dans laquelle il se mélange avec le catalyseur issu du premier étage (2), enceinte à partir de laquelle le catalyseur résultant du mélange est renvoyé vers la zone de réaction.

3. Procédé de craquage catalytique permettant le contrôle fin du niveau de coke résiduel sur le catalyseur régénéré selon la revendication 1, dans lequel le premier étage de régénération est opéré à une vitesse de fluidisation comprise entre 0,3 et 1,6 m/s, et préférentiellement comprise entre 0,5 et 1,2 m/s.

4. Procédé de craquage catalytique permettant le contrôle fin du niveau de coke résiduel sur le catalyseur régénéré selon la revendication 1, dans lequel le premier étage de régénération est opéré avec un rapport CO/CO2 dans les fumées compris entre 0,3 et 2.

5. Procédé de craquage catalytique permettant le contrôle fin du niveau de coke résiduel sur le catalyseur régénéré selon la revendication 1, dans lequel le second étage de régénération est opéré à une vitesse de fluidisation comprise entre 0,3 et 1,3 m/s, et préférentiellement comprise entre 0,5 et 1 m/s.

6. Procédé de craquage catalytique permettant le contrôle fin du niveau de coke résiduel sur le catalyseur régénéré selon la revendication 1, dans lequel le second étage de régénération est opéré avec un rapport CO/CO2 dans les fumées inférieur à 0,05, et préférentiellement inférieur à 0,01.

7. Procédé de craquage catalytique permettant le contrôle fin du niveau de coke résiduel sur le catalyseur régénéré selon la revendication 1, dans lequel le point de réintroduction du catalyseur régénéré issu du second étage de régénération dans le premier étage est distant du point d'arrivée du catalyseur coké en provenance de la zone réactionnelle, d'une distance inférieure au rayon du premier étage de régénération.

8. Procédé de craquage catalytique permettant le contrôle fin du niveau de coke résiduel sur le catalyseur régénéré selon la revendication 1, dans lequel un échangeur de chaleur générant de la vapeur est implanté dans l'enceinte dédiée où se mélange le catalyseur régénéré issu du second étage de régénération avec le catalyseur partiellement régénéré issu du premier étage de régénération.

## Patentansprüche

1. Verfahren zum katalytischen Kracken einer Kohlenwasserstoffcharge mit einem Siedepunkt von mehr als 350°C, unter Verwendung einer feinen Steuerung derMenge an Koksrückstand auf dem regenerierten Katalysator, wobei das Verfahrenmindestens eine Reaktionszone, die im Wanderbett die zu behandelnde Kohlenwasserstoffcharge und den Katalysator in Kontakt bringt, und eine Regenerationszone des gekokten Katalysators am Ausgang der Reaktionszone umfasst, wobei die Regenerationszone geteilt ist in eine erste Regenerationsstufe (2) im Fließbett, die mit partieller Verbrennung arbeitet, das heißt ohne Luftzufuhr, wobei ein Katalysator erzeugt wird, dessen Gehalt an Koksrückstandzwischen 0,3 % und 0,7 % liegt, und in eine zweite Regenerationsstufe (8) im Fließbett, die in Bezug auf die erste Stufe in Serie angeordnet ist und mit vollständiger Verbrennung arbeitet, das heißt mit Luftüberschuss, und wobei ein Katalysator erzeugt wird, dessen Gehalt an Koksrückstand geringer ist als 0,15 %, wobei der Transfer des Katalysators von der ersten zur zweiten Stufe durch die Transportleitung (9) vorgenommen wird, die von einem Gasdurchsatz (10) gespeist wird und mit einem Steuerventil (11) des Katalysatordurchsatzes versehen ist, das an der Basis des Transportrohrs (9) angeordnet ist, wobei der regenerierte Katalysator, der nach der Mischung des partiell regenerierten und vollständig regenerierten Katalysators erhalten wird, einen Gehalt an Koksrückstand von mehr als 0,15 % und bevorzugt mehr als 0,25 % aufweist, wobei der Koksgehalt durch die Steuerung der Zirkulation des am Ausgang der zweiten Regenerationsstufe erhaltenen, vollständig regenerierten Katalysators erhalten wird, der
a) entweder in die erste Regenerationsstufe mit Hilfe einer Transferleitung (17), eines Fließbehälters (16), eines Transportrohrs (20) und eines Steuerventils (21) zurückgeschickt wird, die erste Stufe, aus welcher der Katalysator, der aus der Mischung der beiden Stufen erhalten wird und die gewünschte Menge an Koks besitzt, zur Reaktionszone durch die Leitung (7) zurückgeschickt wird,
b) oder in einen dedizierten Mischbehälter (23) mit Hilfe einer Transferleitung (17), eines Fließbehälters (16), eines Transportrohrs (20) und eines Steuerventils (21) geschickt wird, in dem sich der vollständig regenerierte Katalysator mit dem partiell regenerierten Katalysator aus der ersten Regenerationsstufe mischt, aus dem der Katalysator, der durch die Mischung erhalten wird und die gewünschte Menge an Koks besitzt, in die Reaktionszone durch die Leitung (25) zurückgeschickt wird,
wobei das Verfahren**dadurch gekennzeichnet ist, dass** der Katalysator aus der zweiten Regenerationsstufe, die mit vollständiger Verbrennung arbeitet, in die erste Regenerationsstufe, die mit partieller Verbrennung arbeitet, oder in den Mischbehälter (23) mit Hilfe einer Einheit von Leitungen zurückgeschickt wird, die in Fließrichtung des Katalysators umfassen:
1) den Fließbehälter (16), der mit einer Fließgeschwindigkeit zwischen 0,05 m/s und 0,1 m/s arbeitet, wobei der Katalysator in diesem Behälter absteigende Katalysator eine Geschwindigkeit von weniger als 0,5 m/s aufweist,
2) das Transportrohr (20 mit einer Transportgeschwindigkeit des Katalysators zwischen 1 und 3 m/s arbeitet,
3) das Steuerventil (21) des Katalysatordurchsatzes, das auf der Höhe des Katalysators in der zweiten Regenerationsstufe gesteuert wird und das im Fall b) stromaufwärts vom Mischbehälter (23) angeordnet ist.

2. Verfahrenzum katalytischen Kracken, welches die feine Steuerung der Menge an Koksrückstand auf dem regenerierten Katalysator nach Anspruch 1 gestattet, wobei der Katalysator aus der zweiten Regenerationsstufe, die mit vollständiger Verbrennung arbeitet, in einen Mischfließbehälter (23) zurückgeschickt wird, der mit einer Fließgeschwindigkeit von weniger als 10 cm/s betrieben wird, in dem er sich mit dem Katalysator aus der ersten Stufe (2) mischt, aus dem der aus der Mischung erhaltene Katalysator zur Reaktionszone zurückgeschickt wird.

3. Verfahren zum katalytischen Kracken, welches die feine Steuerung der Menge an Koksrückstand auf dem regenerierten Katalysator nach Anspruch 1 gestattet, wobei die erste Regenerationsstufe mit einer Fließgeschwindigkeit zwischen 0,3 und 1,6 m/s und bevorzugtzwischen 0,5 und 1,2 m/s betrieben wird.

4. Verfahren zum katalytischen Kracken, welches die feine Steuerung der Menge an Koksrückstand auf dem regenerierten Katalysator nach Anspruch 1 gestattet, wobei die erste Regenerationsstufe mit einem Verhältnis CO/CO2 in den Abgasen zwischen 0,3 und 2 betrieben wird.

5. Verfahren zum katalytischen Kracken, welches die feine Steuerung der Menge an Koksrückstand auf dem regenerierten Katalysator nach Anspruch 1 gestattet, wobei die zweite Regenerationsstufe mit einer Fließgeschwindigkeit zwischen 0,3 und 1,3 m/s und bevorzugtzwischen 0,5 und 1 m/s betrieben wird.

6. Verfahren zum katalytischen Kracken, welches die feine Steuerung der Menge an Koksrückstand auf dem regenerierten Katalysator nach Anspruch 1 gestattet, wobei die zweite Regenerationsstufe mit einem Verhältnis CO/CO2 in den Abgasen von weniger als 0,05 und bevorzugt von weniger als 0,01 betrieben wird.

7. Verfahren zum katalytischen Kracken, welches die feine Steuerung der Menge an Koksrückstand auf dem regenerierten Katalysator nach Anspruch 1 gestattet, wobei der Wiedereinführungspunkt des regenerierten Katalysators aus der zweiten Regenerationsstufe in die erste Stufe von dem Ankunftspunkt des gekokten Katalysators aus der Reaktionszone in einer Distanz beabstandet ist, die kleiner ist als der Radius der ersten Regenerationsstufe.

8. Verfahren zum katalytischen Kracken, welches die feine Steuerung der Menge an Koksrückstand auf dem regenerierten Katalysator nach Anspruch 1 gestattet, wobei ein Wärmetauscher, der Dampf erzeugt, in den dedizierten Behälter platziert ist, wo sich der regenerierte Katalysator aus der zweiten Regenerationsstufe mit dem partiell regenerierten Katalysator aus der ersten Regenerationsstufe mischt.

## Claims

1. A process for catalytic cracking of a hydrocarbon feed with a boiling point of higher than 350°C, using a fine control of the residual coke level on the regenerated catalyst, said process comprising at least one reaction zone for contacting the hydrocarbon feed to be treated and the catalyst in a transported bed, and a regeneration zone for said coked catalyst at the discharge from the reaction zone, said regeneration zone being divided into a first regeneration stage in a fluidised bed operating with partial combustion, that is to say with a shortage of air, generating a catalyst whose residual coke rate is between 0.3% and 0.7% and a second regeneration stage in a fluidised bed disposed in series in relation to the first stage and operating with total combustion, that is to say with an excess of air, and generating a catalyst whose residual coke rate is less than 0.15%, transfer of the catalyst from the first to the second stage being implemented by the transport line (9) supplied by a gas flow (10) and provided with a valve (11) for controlling the catalyst flow placed at the base of the transport tube (9), the regenerated catalyst obtained following mixing of the partially regenerated and totally regenerated catalysts having a residual coke rate of higher than 0.15% and preferably higher than 0.25%, said coke rate being obtained by controlling the circulation of the totally regenerated catalyst which is obtained at the discharge from the second regeneration stage which is
a) either passed back into the first regeneration stage by means of a transfer line (17), a fluidised chamber (16), a transport tube (20) and a control valve (21), from which first stage the catalyst resulting from mixing of the two stages and having the desired coke level is passed back to the reaction zone by the conduit (7),
b) or is passed into a dedicated mixing chamber (23) by means of a transfer line (17), a fluidised chamber (16), a transport tube (20) and a control valve (21), in which mixing chamber (23) the totally regenerated catalyst is mixed with the partially regenerated catalyst issuing from the first regeneration stage, from which mixing chamber (23) said catalyst resulting from the mixing operation and having the desired coke level is passed back into the reaction zone by the conduit (25), the process being **characterised in that** the catalyst issuing from the second regeneration stage operating with total combustion is passed back into the first regeneration stage operating with partial combustion or into the mixing chamber (23) by means of an assembly of conduits comprising in the direction of flow of said catalyst:
1) the fluidised chamber (16) operating at a fluidisation speed of between 0.05 m/s and 0.1 m/s, the catalyst flowing downwardly in said chamber at a speed of less than 0.5 m/s,
2) the transport tube (20) operating at a catalyst transport speed of between 1 and 3 m/s, and
3) the control valve (21) for controlling the flow of catalyst pilot-controlled by the level of catalyst in the second regeneration stage and which in case b) is disposed upstream of the mixing chamber (23).

2. A catalytic cracking process permitting fine control of the residual coke level on the regenerated catalyst according to claim 1 wherein the catalyst issuing from the second regeneration stage operating with total combustion is passed back into a fluidised mixing chamber (23) operating at a fluidisation speed of less than 10 cm/s, in which it is mixed with the catalyst issuing from the first stage (2), from which chamber the catalyst resulting from the mixing operation is passed back to the reaction zone.

3. A catalytic cracking process permitting fine control of the residual coke level on the regenerated catalyst according to claim 1 wherein the first regeneration stage is operated at a fluidisation speed of between 0.3 and 1.6 m/s and preferably between 0.5 and 1.2 m/s.

4. A catalytic cracking process permitting fine control of the residual coke level on the regenerated catalyst according to claim 1 wherein the first regeneration stage is operated with a CO/CO2 ratio in the smoke of between 0.3 and 2.

5. A catalytic cracking process permitting fine control of the residual coke level on the regenerated catalyst according to claim 1 wherein the second regeneration stage is operated at a fluidisation speed of between 0.3 and 1.3 m/s and preferably between 0.5 and 1 m/s.

6. A catalytic cracking process permitting fine control of the residual coke level on the regenerated catalyst according to claim 1 wherein the second regeneration stage is operated with a CO/CO2 ratio in the smoke of less than 0.05 and preferably less than 0.01.

7. A catalytic cracking process permitting fine control of the residual coke level on the regenerated catalyst according to claim 1 wherein the point of reintroduction of the regenerated catalyst issuing from the second regeneration stage in the first stage is spaced from the arrival point of the coked catalyst from the reaction zone by a distance less than the radius of the first regeneration stage.

8. A catalytic cracking process permitting fine control of the residual coke level on the regenerated catalyst according to claim 1 wherein a heat exchanger generating vapour is installed in the dedicated chamber where the regenerated catalyst issuing from the second regeneration stage is mixed with the partially regenerated catalyst issuing from the first regeneration stage.
